# EUROPEAN PATENT APPLICATION

(11) **EP 4 354 953 A1**
(43) Date of publication of application: **17.04.2024**
(21) Application number: 22820093.7
(22) Date of filing: 31.05.2022
(51) Int. Cl.: H04W 28/16, H04W 52/02, H04W 52/24, H04W 84/12, H04W 92/20

(54) **COMMUNICATION DEVICE, COMMUNICATION METHOD, AND PROGRAM**

(30) Priority: 10.06.2021 JP 2021097302
(71) Applicant: Canon Kabushiki Kaisha, Tokyo 146-8501 (JP)
(72) Inventor: SOMA Tomoyasu, Tokyo 146-8501 (JP)
(74) Representative: Canon Europe Limited
(86) International application number: PCT/JP2022/022088
(87) International publication number: WO 2022/259911

(57) **Abstract**

A communication apparatus acquires, in a case where a first other communication apparatus operating as an access point defined by an Institute of Electrical and Electronics Engineers (IEEE) 802.11 standard and a second other communication apparatus operating as an access point defined by the IEEE802.11 standard cooperate to perform Spatial Reuse, information on the second other communication apparatus and notifies a station having established a connection with the communication apparatus of the information and an instruction to not operate in a power save mode.

## Description

### Technical Field

The present invention relates to a wireless communication technique.

### Background Art

In recent years, the amount of usage of the Internet is increasing year by year along with the progress in information communication techniques, and various communication techniques are being developed in order to meet increasing demands. Among the techniques, a wireless local area network (wireless LAN) technique has achieved high throughput in the Internet communication of packet data, audio, video, and the like by a wireless LAN terminal, and various techniques are presently being developed actively.

In the progress of the wireless LAN techniques, a lot of standardization works by the Institute of Electrical and Electronics Engineers (IEEE) that is a standardization organization for the wireless LAN techniques play important roles, and as one of WLAN communication standards, IEEE802.11 series are known. Here, IEEE is an abbreviation of Institute of Electrical and Electronics Engineers. Also, WLAN is an abbreviation of Wireless Local Area Network. The IEEE802.11 series standards include IEEE802.11a/b/g/n/ac/ax.

Japanese Patent Application Laid-Open No. 2018-50133 discusses performing wireless communication by Orthogonal Frequency Division Multiple Access (OFDMA) in the IEEE802.11ax standard. The IEEE802.11ax standard realizes high peak throughput by performing wireless communication by OFDMA.

### Citation List

### Patent Literature

PTL 1: Japanese Patent Application Laid-Open No. 2018-50133

In recent years, as a new standard of the IEEE802.11 series, formulation of the IEEE802. 1 1be standard is being under study. In the IEEE802.11be standard, in addition to adoption of OFDMA similar to the IEEE802.11ax standard, a technique for improving utilization efficiency of frequencies by using Spatial Reuse is being under study. Here, Spatial Reuse in which one access point (AP) determines transmission power of other APs is called Coordinated Spatial Reuse (CSR).

Normally, a wireless LAN system adopts (Carrier Sense Multiple Access with Collision Avoidance (CSMA/CA) in order to avoid collision of two or more communications. The CSR enables simultaneous communication by adjusting transmission power of wireless LAN apparatuses such that their communications do not influence on each other, thereby enhancing the utilization efficiency of frequencies. In the CSR, a method in which a Sharing AP determines transmission power of an Overlapping Basic Service Set (OBSS) AP in the CSR is being under study. More specifically, the Sharing AP determines the transmission power of the OBSS AP from reception sensitivity of a downlink to a station (STA) connected to itself and a path loss between the STA and the OBSS AP. Here, OBSS is an abbreviation of Overlapping Basic Service Set.

### Summary of Invention

### Technical Problem

To determine the transmission power of the OBSS AP by the Sharing AP in the CSR, the STA connected to the Sharing AP calculates the path loss between the STA and the OBSS AP by receiving a packet including transmission power information from the OBSS AP. However, in a case where a power management mode of the STA is a Power Save mode (PSmode), the STA cannot receive the packet from the OBSS AP and cannot calculate the path loss because downlink communication is performed only at a determined timing.

### Solution to Problem

To solve the above-described issue, a communication apparatus according to the present invention is a communication apparatus operating as an access point defined by an Institute of Electrical and Electronics Engineers (IEEE) 802.11 standard and including an acquisition unit configured to acquire, in a case where the communication apparatus and another communication apparatus operating as an access point defined by the IEEE802.11 standard cooperate to perform Spatial Reuse, information on the another communication apparatus, and a notification unit configured to notify a station having established a connection with the communication apparatus of the information acquired by the acquisition unit and an instruction to not operate in a power save mode.

Further, a communication apparatus according to the present invention is a communication apparatus operating as a station defined by an Institute of Electrical and Electronics Engineers (IEEE) 802.11 standard and including a reception unit configured to receive, in a case where a first other communication apparatus operating as an access point defined by the IEEE802.11 standard and a second other communication apparatus operating as an access point defined by the IEEE802.11 standard perform Spatial Reuse, information on the second other communication apparatus from the first other communication apparatus having established a connection with the communication apparatus, and a control unit configured to control, in a case where the reception unit receives the information, the communication apparatus not to operate in a power save mode.

### Advantageous Effects of Invention

In CST, a Sharing AP can appropriately determine the transmission power of an OBSS AP.

### Brief Description of Drawings

[Fig. 1] Fig. 1 is a diagram illustrating a configuration diagram of a network.
[Fig. 2] Fig. 2 is a diagram illustrating a hardware configuration example of an access point (AP) and a station (STA).
[Fig. 3] Fig. 3 is a diagram illustrating a functional configuration example of the AP.
[Fig. 4] Fig. 4 is a diagram illustrating a configuration example of a Measurement announcement frame.
[Fig. 5] Fig. 5 is a diagram illustrating a configuration of a Neighbor Report element.
[Fig. 6] Fig. 6 is a diagram illustrating a configuration example of a Measurement Request element.
[Fig. 7] Fig. 7 is a flowchart illustrating processing performed by the AP.
[Fig. 8] Fig. 8 is a diagram illustrating a functional configuration example of the STA.
[Fig. 9] Fig. 9 is a diagram illustrating a configuration example of a Measurement Report element.
[Fig. 10] Fig. 10 is a flowchart illustrating processing performed by the STA.
[Fig. 11] Fig. 11 is a flowchart illustrating processing performed by the AP.
[Fig. 12] Fig. 12 is a diagram illustrating a functional configuration example of the STA.
[Fig. 13] Fig. 13 is a flowchart illustrating processing performed by the STA.

### Description of Embodiments

Exemplary embodiments are described in detail below with reference to accompanying drawings. Note that the following exemplary embodiments do not limit the invention according to the appended claims. A plurality of features is described in the exemplary embodiments; however, not all of the plurality of features are necessarily essential for the invention, and the plurality of features may be optionally combined. Further, in the accompanying drawings, the same or similar components are denoted by the same reference numerals, and repetitive description is omitted.

### Exemplary Embodiments

### (First Exemplary Embodiment)

### (Network Configuration)

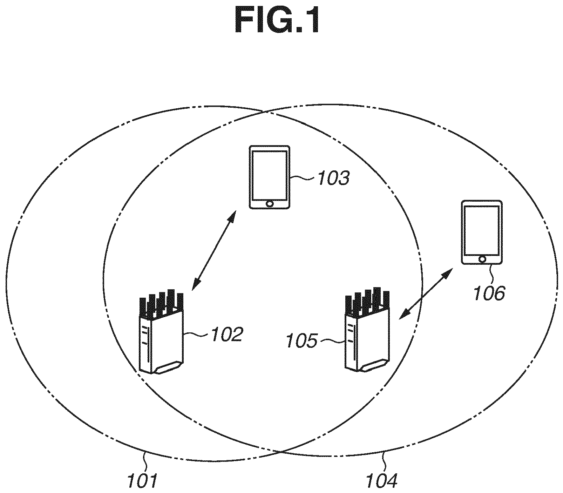

Fig. 1 illustrates a configuration example of a wireless communication network according to the present exemplary embodiment.

A wireless communication network 101 includes one access point (AP 102) as a communication apparatus complying with the Institute of Electrical and Electronics Engineers (IEEE) 802.11be standard and one or more stations (STA 103). Likewise, a wireless communication network 104 includes one access point (AP 105) as a communication apparatus complying with the IEEE802.11be standard and one or more stations (STA 106). Each of the communication apparatuses can perform communication in frequency bands of a 2.4 GHz band, a 5 GHz band, and/or a 6 GHz band. The frequency bands used by each of the communication apparatuses are not limited thereto, and different frequency bands, for example a 60 GHz band, may be used. Further, each of the communication apparatuses can perform communication by using any of bandwidths of 20 MHz, 40 MHz, 80 MHz, 160 MHz and 320 MHz. Each of the AP 102, the AP 105, the STA 103, and the STA 106 can multiplex signals of a plurality of users by performing Orthogonal Frequency Division Multiple Access (OFDMA) communication, thereby realizing multiuser (MU or Multi User) communication. OFDMA is an abbreviation of Orthogonal Frequency Division Multiple Access. Further, the AP 102, the AP 105, the STA 103, and the STA 106 may be able to perform Multiple-Input and Multiple-Output (MIMO) communication. In this case, each of the AP 102, the AP 105, the STA 103, and the STA 106 includes a plurality of antennas, and one of them transmits different signals from the respective antennas using the same frequency channel. A reception side simultaneously receives all of the signals arrived from a plurality of streams by using the plurality of antennas, and separates and decodes the signals of the respective streams.

In such a manner, by performing the MIMO communication, the AP 102 or the AP 105 and the STA 103 or the STA 106 can communicate more data in the same time than in a case where the MIMO communication is not performed. Further, the AP 102 and the AP 105 can establish wireless links with the STA 103 and the STA 106, respectively, through connection processing such as an association process, defined by the IEEE802.11 series standards. In addition, the configuration of the wireless communication network illustrated in Fig. 1 is merely an example for description, and for example, a network including a large number of be apparatuses, ax apparatuses and legacy apparatuses (apparatuses complying with IEEE802.11a/b/g/n/ac standards) may be configured over a wide region. Further, the AP 102 and the STA 103 may support legacy standards (IEEE802.11a/b/g/n/ac standards) that are standards prior to IEEE802.11ax. Furthermore, the AP 102 and the STA 103 may support other communication standards such as Bluetooth^{®}, Near Field Communication (NFC), Ultra Wide Band (UWB), Zigbee, and Multi Band Orthogonal Frequency Division Multiplexing Alliance (MBOA). UWB is an abbreviation of Ultra Wide Band, and MBOA is an abbreviation of Multi Band OFDM Alliance. OFDM is an abbreviation of Orthogonal Frequency Division Multiplexing. NFC is an abbreviation of Near Field Communication. UWB includes wireless USB, wireless 1394, and Winet. Further, the AP 102 and the STA 103 may support a wired communication standard such as a wired LAN.

Specific examples of the AP 102 and the AP 105 include a wireless LAN router, a personal computer (PC), and a smartphone; however, the AP 102 and the AP 105 are not limited thereto. The AP 102 and the AP 105 can be any communication apparatuses that can perform the OFDMA communication with other communication apparatuses. Further, the AP 102 and the AP 105 may be information processing apparatuses such as wireless chips that can perform wireless communication in compliance with the IEEE802.11be standard. Further, specific examples of the STA 103 and the STA 106 include a camera, a tablet, a smartphone, a PC, a mobile phone, and a video camera; however, the STA 103 and the STA 106 are not limited thereto. The STA 103 and the STA 106 can be any communication apparatuses that can perform the OFDMA communication with other communication apparatuses. The STA 103 and the STA 106 may be information processing apparatuses such as wireless chips that can perform wireless communication in compliance with the IEEE802.11be standard. Further, in Fig. 1, a plurality of networks each including one AP and one STA is configured; however, the number of networks, the number of APs and the number of STAs are not limited thereto. The wireless communication networks 101 and 104 are arranged adjacent to each other, and an AP that executes CSR serves as a Sharing AP, and an OBSS AP viewed from the Sharing AP serves as a Shared AP. In the present exemplary embodiment, the AP 102 serves as a Sharing AP, and functional configurations and processing of the AP 102 and the STA 103 in a procedure for measuring a path loss between the STA 103 connected to the AP 102 and the OBSS AP 105 are described. Further, the AP 105 and the STA 106 have similar functional configurations and processing functions, and similar effects are also achievable in a case where the AP 105 serves as a Sharing AP. Furthermore, similar effects are achievable in a case where a plurality of other networks is present. In addition, an information processing apparatus such as a wireless chip is connected to an antenna for transmitting a generated signal.

### (Hardware Configurations of AP and STA)

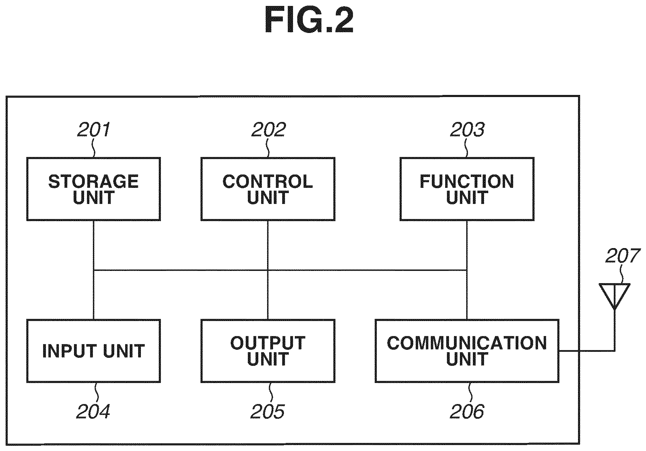

Fig. 2 illustrates a hardware configuration example of the AP 102 and the AP 105.

A storage unit 201 is configured by one or more memories such as a read only memory (ROM) and a random access memory (RAM), and stores computer programs for executing various kinds of operation described below, and various kinds of information such as communication parameters for wireless communication. ROM is an abbreviation of Read Only Memory, and RAM is an abbreviation of Random Access Memory. In addition, as the storage unit 201, other than a memory such as a ROM and a RAM, a storage medium such as a flexible disk, a hard disk, an optical disk, a magnetooptical disk, a compact disc read only memory (CD-ROM), a compact disc recordable (CD-R), a magnetic tape, a nonvolatile memory card, and a digital versatile disc (DVD) may be used. The storage unit 201 may include a plurality of memories and the like.

A communication unit 206 controls wireless communication in compliance with the IEEE802.11be standard. Further, the communication unit 206 may control wireless communication in compliance with other IEEE802.11 standard series in addition to the IEEE802.11be standard, and may control wired communication such as a wired LAN. The communication unit 206 controls an antenna 207 to transmit/receive signals for wireless communication generated by a control unit 202. The AP 102 and the AP 105 may each include a plurality of communication units 206. In a case where a plurality of links is established in multilink communication, the AP 102 and the AP 105 including a plurality of communication units 206 establishes at least one link per one communication unit 206. Alternatively, the AP 102 and the AP 105 may establish a plurality of links by using one communication unit 206. In this case, the communication unit 206 performs communication through the plurality of links by switching frequency channels operating in a time-division manner. Further, in a case where each of the AP 102 and the AP 105 supports an NFC standard, a Bluetooth standard and the like in addition to the IEEE802.11be standard, the communication unit 206 may control wireless communication in compliance with these communication standards. Furthermore, in a case where each of the AP 102 and the AP 105 can perform wireless communication in compliance with a plurality of communication standards, a communication unit and an antenna corresponding to each of the communication standards may be individually provided. The AP 102 and the AP 105 communicate data, such as image data, document data and video data, with the STA 103 and the STA 106, respectively, via their respective communication units 206. Further, the antenna 207 may be configured separately from the communication unit 206, or the antenna 207 and the communication unit 206 may be integrally configured as one module.

The antenna 207 is an antenna that can perform communication in the 2.4 GHz band, the 5 GHz band, and the 6 GHz band. In the present exemplary embodiment, the AP 102 includes one antenna; however, the AP 102 may include different antennas for respective frequency bands. Further, in a case where the AP 102 and the AP 105 each includes a plurality of antennas, each of the AP 102 and the AP 105 may include communication units 206 corresponding to the respective antennas.

Further, the STA 103 and the STA 106 each has a hardware configuration similar to the hardware configuration of the AP 102.

### (Functional Configuration of AP 102)

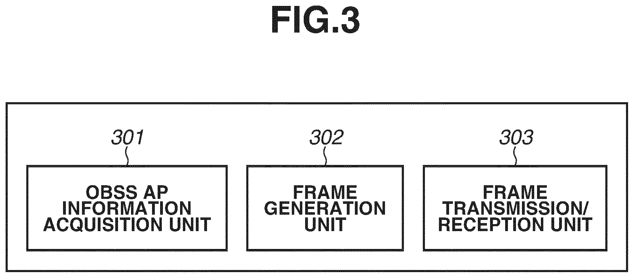

Fig. 3 illustrates a functional configuration example of the AP 102. The AP 102 includes an OBSS AP information acquisition unit 301, a frame generation unit 302, and a frame transmission/reception unit 303. These units may be configured by software, or a part or all of these units may be configured by hardware. The OBSS AP information acquisition unit 301 acquires Capability of the OBSS AP 105 as a target of CSR by receiving a beacon and a management frame from the OBSS AP 105. The frame generation unit 302 generates a Measurement announcement frame. The Measurement announcement frame is a frame including information on the OBSS AP 105, requested contents of the Measurement, and a notification to change to a Non-PSmode (Active mode).

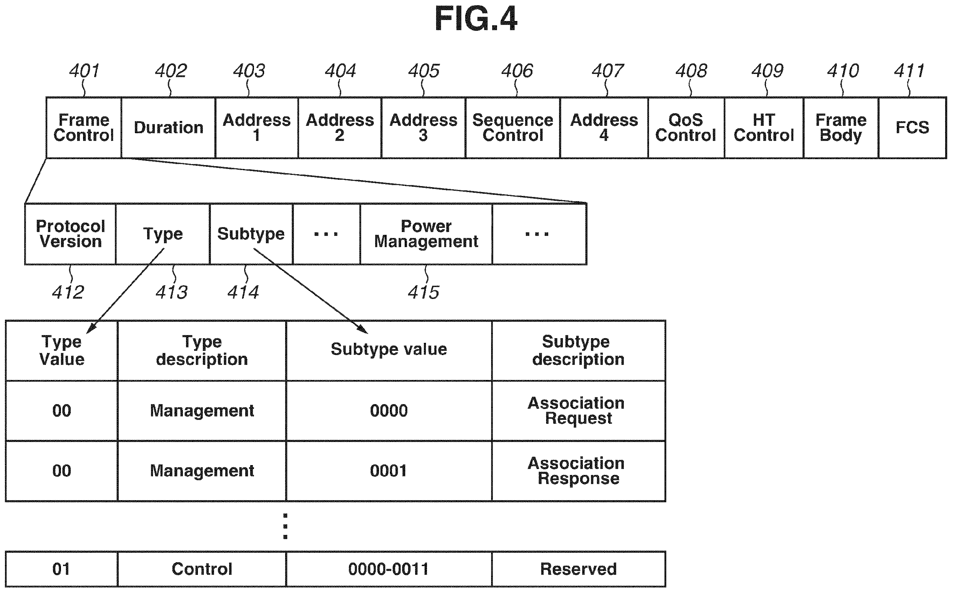

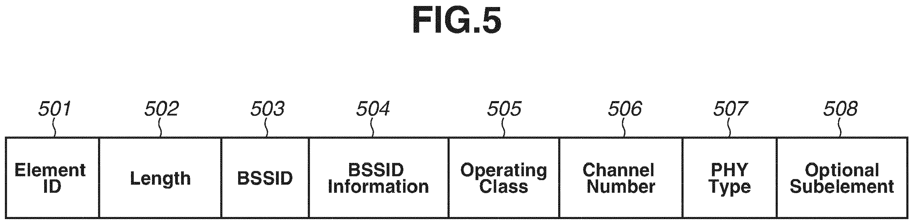

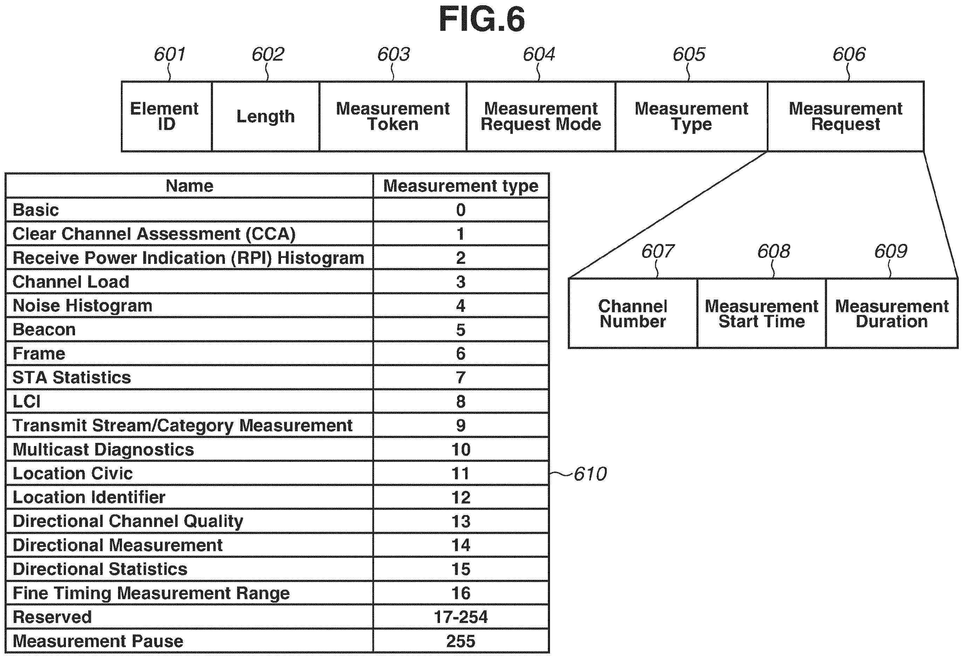

Fig. 4 illustrates an example of a frame format of the Measurement announcement frame. The Measurement announcement frame according to the present exemplary embodiment uses a Control Frame, which is indicated by Reserved, of a Frame Control field, thereby creating a new Type and new Subtype. Further, the STA is notified so as not to be in a Power Save mode by setting a bit of a Power Management field 415 to 1. Further, a frame body includes a Neighbor Report element defined by IEEE802.11 as illustrated in Fig. 5. This enables transmission of the information on the OBSS AP participating the CSR that is acquired by the OBSS AP information acquisition unit 301 to the STA. Further, the frame body includes a Measurement Request element including a new Measurement Type 605 requesting Measurement of a path loss as illustrated in Fig. 6. Using the element, the contents of Measurement Request of the path loss is transmitted. A list 610 is a list of Measurement Type 605. The Measurement announcement frame may be created using Management Frame or Data Frame. Further, new Element may be created for the information on the OBSS AP and the request contents of Measurement; however, the present invention is not limited thereto.

The frame transmission/reception unit 303 controls transmission/reception of a management frame, a control frame, and a data frame.

### (Processing by AP 102)

Subsequently, processing in the CSR performed by the AP 102 configured as described above is described.

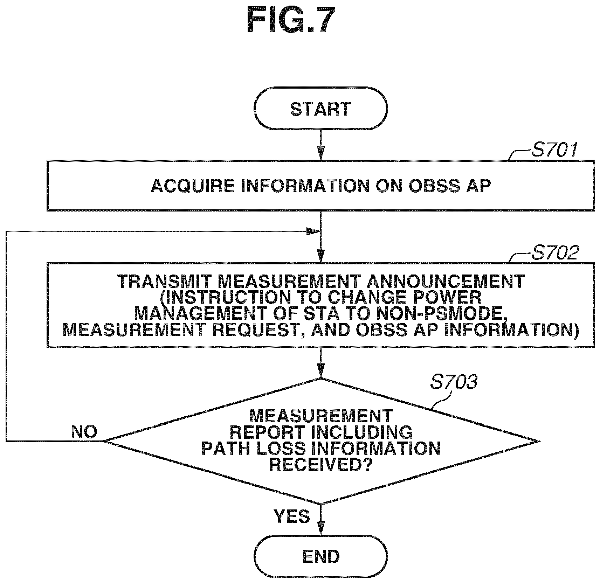

Fig. 7 is a flowchart illustrating the processing performed by the AP 102. Note that the operation flow is processed when the control unit 202 reads out and executes the computer programs stored in the storage unit 201 in a case where the AP 102 performs the CSR.

First, the AP 102 acquires Capability of the OBSS AP participating the CSR by receiving a beacon and a management frame from the AP forming the OBSS (in step S701). Subsequently, the AP 102 transmits the Measurement announcement frame to the STA of its own BSS (in step S702). This frame includes the information on the OBSS AP, the path loss of which is to be measured, an instruction to set a power management mode of the STA to a Non-Power Save mode, and an instruction to cause the STA to start measurement of the path loss. Here, the Non-Power Save mode indicates an active mode. After transmitting the Measurement announcement frame, the AP 102 receives Measurement Report indicating a path loss measurement result from the STA. In step S703, it is determined whether Measurement Report has been received. In step S703, in a case where Measurement Report cannot be received even after a predetermined time has elapsed after transmission of the Measurement announcement frame, and the path loss information cannot be acquired, the processing returns to step S702. In step S703, in a case where Measurement Report has been received, and the path loss information can be acquired, the AP 102 determines that a determination result is YES, and the operation ends.

### (Functional Configuration of STA 103)

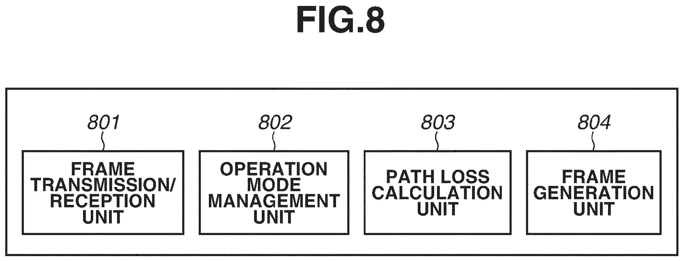

Fig. 8 illustrates a functional configuration example of the STA 103. The STA 103 includes a frame transmission/reception unit 801, an operation mode management unit 802, a path loss calculation unit 803, and a frame generation unit 804. These units may be configured by software, or a part or all of these units may be configured by hardware.

The frame transmission/reception unit 801 controls transmission/reception of a management frame, a control frame, and a data frame.

The operation mode management unit 802 refers to the bit of the Power management field 415 of the received frame illustrated in Fig. 4, and the operation mode management unit 802 sets the power management mode to the Non-Power Save mode in a case where the bit is 1 and sets the power management mode to the Power Save mode in a case where the bit is 0. Here, the Non-Power Save mode indicates the active mode.

The path loss calculation unit 803 receives a packet from the OBSS AP, and calculates a path loss between itself and the OBSS AP from transmission power information and reception sensitivity obtained from the received packet. The path loss can be determined by calculating a difference between the transmission power and the reception sensitivity.

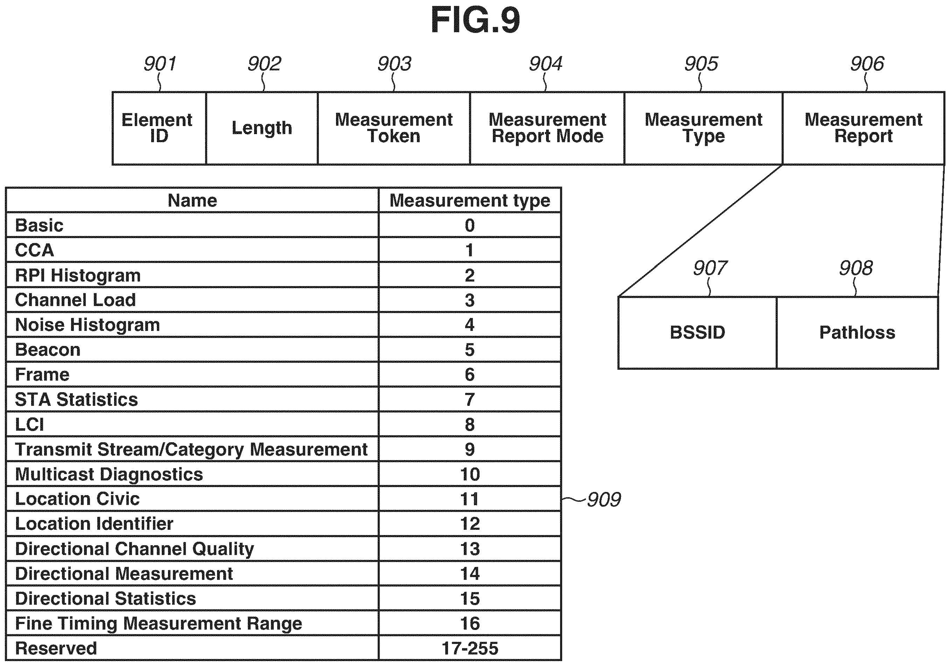

The frame generation unit 804 generates Measurement Report for transmitting the path loss calculation result to the AP. Measurement Report at least includes a BSSID of the target OBSS AP, the path loss of which has been measured, and information indicating the measured path loss value. To transmit these pieces of information, a new Measurement Type for measuring a path loss is created in a Measurement Type, which is indicated by Reserved, of the Measurement Report element illustrated in Fig. 9. The BSSID of the OBSS AP as the measurement target and the path loss value calculated by the path loss calculation unit are stored in a BSSID field 907 and a Pathloss field 908, respectively. A list 909 is a list of Measurement Type 905. However, the frame for transmitting the path loss measurement result may be an element other than the Measurement Report element, and the present invention is not limited thereto.

### (Processing by STA 103)

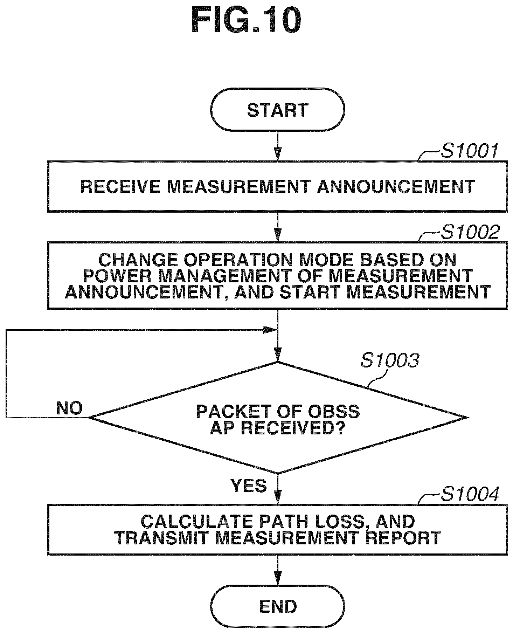

Subsequently, processing performed by the STA 103 configured as described above is described. Fig. 10 is a flowchart illustrating the processing by the STA 103. Note that the operation flow is processed when the control unit 202 reads out and executes the computer programs stored in the storage unit 201 in a case where the STA 103 performs the CSR. First, the STA 103 receives a Measurement announcement transmitted from the connected AP (in step S1001). The STA 103 sets the power management mode to the Non-Power Save mode based on information notified by the received Measurement announcement, and starts path loss measurement (in step S1002). The STA 103 starts reception of a packet from the AP as the measurement target indicated by the OBSS AP information included in the Measurement announcement received in step S1002, and then in step S1003, whether the packet of the OBSS AP including transmission power information is received is determined. In a case where the STA 103 cannot receive the packet of the OBSS AP within a predetermined time and determines that a determination result is NO in step S1003, the STA 103 attempts to receive the packet of the OBSS AP again. In a case where the STA 103 has received the packet of the OBSS AP and determines that the determination result is YES in step S1003, the processing proceeds to step S 1004. In step S 1004, the path loss between the STA 103 and the target AP is calculated, and a calculated value is transmitted as Measurement Report to the connected AP. After the transmission of the Measurement Report in step S 1004, the operation ends.

According to the present exemplary embodiment, the AP 102 notifies the STA 103 so as to change the power management mode to the Non-Power Save mode as described above, which enables the STA 103 to receive the packet from the OBSS AP. As a result, it is possible to acquire the path loss information necessary for determining the transmission power of the OBSS AP in the CSR.

### (Second Exemplary Embodiment)

In the first exemplary embodiment, the AP 102 explicitly notifies the STA 103 so as to change the power management mode to the Non-Power Save mode by setting the bit of the Power management field in the Measurement announcement frame. In the present exemplary embodiment, the STA 103 changes the power management mode to the Non-Power Save mode without a notification using the Power management field from the AP 102, which makes it possible to simplify the implementation on the AP side. Further, since the Power management field is not used, the Measurement announcement can be notified to the STA by including the Measurement announcement in a management frame, a control frame, a data frame, or the like. Furthermore, in the case where the packet from the OBSS AP cannot received and the path loss cannot be calculated, the path loss is handled as a predetermined value, which makes it possible to deal with an environment where the STA 103 cannot receive the packet from the OBSS AP. Further, it is possible to minimize power consumption by adding processing for returning the power management mode to a state before the change after the STA completes measurement of the path loss. In the present exemplary embodiment, an exemplary embodiment that can achieve the above-described effects in addition to effects similar to the effects achieved by the first exemplary embodiment is described.

### (Functional Configuration of AP)

In the functional configuration of the AP 102 illustrated in Fig. 3, functional units having functions different from the functions according to the first exemplary embodiment are described, and description of the functional units having similar functions is omitted.

The frame generation unit 302 generates the Measurement announcement frame illustrated in Fig. 4 as in the first exemplary embodiment. In the present exemplary embodiment, however, the Power management field of the Measurement announcement frame is not used, and the STA is not explicitly notified so as to change the power management mode. Therefore, the Measurement announcement frame according to the present exemplary embodiment is a frame including a Neighbor Report element and a Measurement Request element as with the first exemplary embodiment. Further, for the Measurement announcement, a new frame including information similar to the Neighbor Report element and the Measurement Request element may be created without using the frames illustrated in Fig. 4. The created element may be included in a management frame, a control frame, a data frame, or the other frames; however, the present invention is not limited thereto.

### (Processing by AP 102)

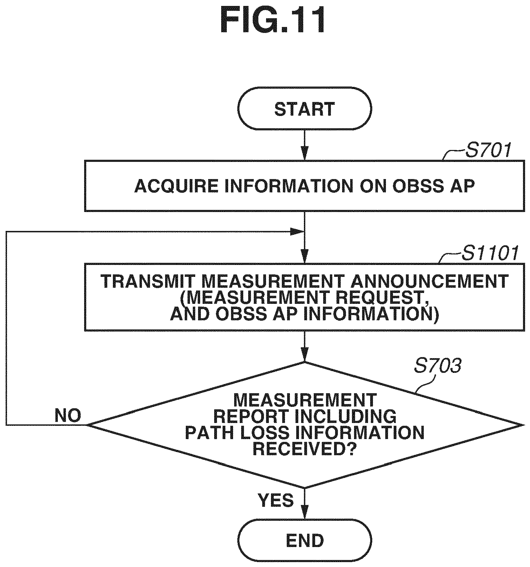

Fig. 11 is a flowchart illustrating operation of the AP 102 according to the present exemplary embodiment. Basic processing is similar to that in the first exemplary embodiment, and contents of the Measurement announcement transmitted in step S1101 are only different as described in the functional configuration of the AP according to the present exemplary embodiment.

### (Functional Configuration of STA)

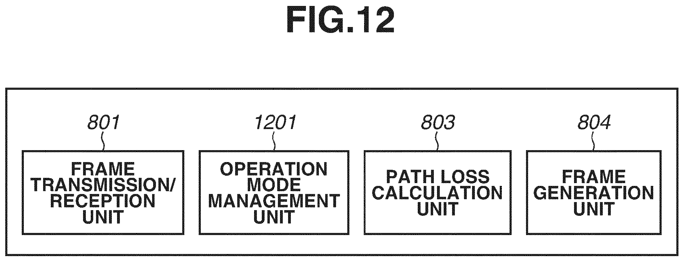

Fig. 12 illustrates a functional configuration of the STA according to the present exemplary embodiment. In the functional configuration of the STA 103, functional units performing the operation same as or similar to those in the functional configuration (Fig. 8) according to the first exemplary embodiment are denoted by the same reference numerals, and repetitive description is omitted.

In the first exemplary embodiment, the operation mode management unit 802 illustrated in Fig. 8 monitors the bit of the Power management field 415 of the received frame illustrated in Fig. 4, and changes the power management mode based on the bit. In the present exemplary embodiment, when it is determined that the Measurement announcement has been received, based on fields 413 and 414 of the received frame, the STA sets its own power management mode to the Non-Power Save mode. The operation mode is managed by an operation mode management unit 1201. Accordingly, the STA autonomously changes the power management mode without receiving an explicit notification to change the power management mode from the AP. Further, the STA may change the operation mode when it is determined that the Measurement announcement has been received, based on the Element IDs of the Measurement Request element and the Neighbor Report element of the received frame.

### (Processing by STA 103)

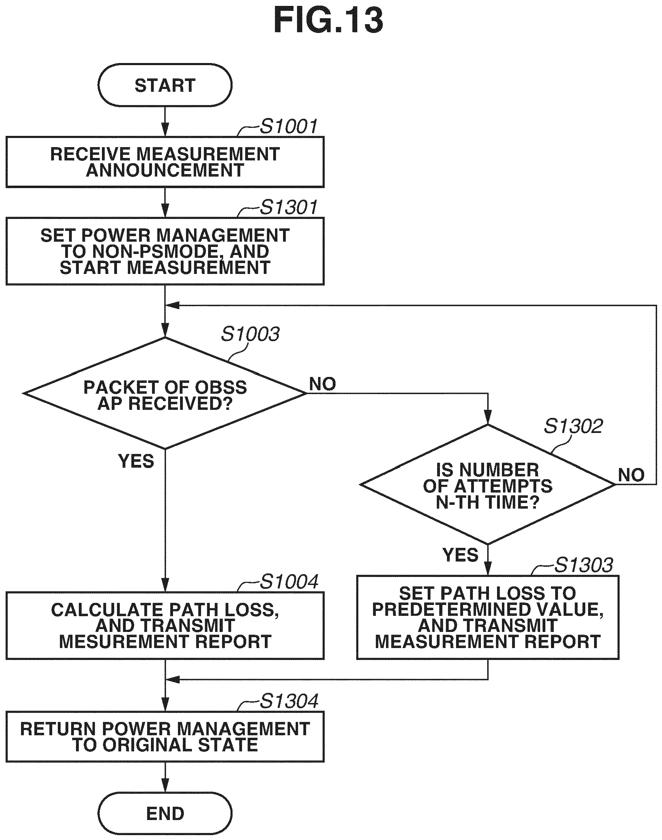

Fig. 13 is a flowchart illustrating operation by the STA 103 according to the present exemplary embodiment. In the flowchart of Fig. 13, processing for performing the operation same as or similar to the flowchart (Fig. 10) according to the first exemplary embodiment is denoted by the same reference numerals, and repetitive description is omitted.

In the present exemplary embodiment, in step S1001, the STA 103 receives the Measurement announcement. When the STA 103 receives the Measurement announcement in step S1001, the STA 103 sets the power management mode to the Non-Power Save mode, and starts measurement of the path loss (in step S1301). In step S1003, whether the packet of the OBSS AP including transmission power information is received is determined. In a case where the STA 103 can receive the packet of the OBSS AP within a predetermined time, the STA 103 determines that a determination result is YES in step S1003, and the processing proceeds to step S1004. In step S1004, the STA 103 calculates the path loss, and transmits Measurement Report to the AP 102. In a case where the STA 103 cannot receive the packet of the OBSS AP within the predetermined time, the STA 103 determines that the determination result is NO in step S1003, and the processing proceeds to step S1302. In step S1302, the STA 103 counts the number of times that the STA 103 attempts to receive the packet of the OBSS AP. In a case where the number of times of attempts is less than a predetermined number, the STA 103 attempts to receive the packet of the OBSS AP again. In a case where the number of times of attempts is greater than or equal to the predetermined number, the STA 103 determines that a determination result is YES, and the processing proceeds to step S1303. In step S1303, a predetermined value is set without calculating the path loss, and Measurement Report is transmitted to the AP 102. The predetermined value of the path loss is the greatest value among values representable in a Pathloss field 908 storing the path loss value of Measurement report illustrated in Fig. 9. After the processing in step S1004 or S1303, the STA 103 returns the power management mode changed in step S1301 to the original state, and STA 103 ends the processing.

According to the present exemplary embodiment, by the above-described operation of the AP 102 and the STA 103, the STA 103 autonomously changes the power management mode without receiving an explicit power management change notification from the AP 102, and effects similar to the effects in the first exemplary embodiment are achievable. In addition, it is possible to deal with the environment where the packet of the OBSS AP is not receivable, and to minimize the power consumption.

### (Other Exemplary Embodiments)

The above-described exemplary embodiments are illustrative, the technical scope of the present invention is not limited thereto, and the present invention includes various kinds of modifications in addition to the above-described exemplary embodiments. The Coordinated Spatial Reuse (CSR) is one method of Spatial Reuse, and is a concept including a method in which one AP determines transmission power of other APs. Further, in the above-described exemplary embodiments, the IEEE802.11be standard is described as an example of the wireless LAN standard; however, the exemplary embodiments are applicable to various kinds of standards (IEEE802.11x) including legacy standards and successor standards of the IEEE802.11 series and other wireless standards of the same type.

Further, the present invention can be implemented by processing of supplying a program for implementing one or more functions of the above-described exemplary embodiments to a system or an apparatus via a network or a storage medium, and causing one or more processors in a computer of the system or the apparatus to read out and execute the program. Further, the present invention can be implemented by a circuit (e.g., application specific integrated circuit (ASIC)) realizing one or more functions.

The present invention is not limited to the above-described exemplary embodiments, and can be variously changed and modified without departing from the spirit and the scope of the present invention. Accordingly, the following claims are attached in order to publicize the scope of the present invention.

This application claims priority from Japanese Patent Application No. 2021-097302 filed June 10, 2021, which is hereby incorporated by reference herein.

## Claims

1. A communication apparatus operating as an access point defined by an Institute of Electrical and Electronics Engineers (IEEE)802.11 standard, the communication apparatus comprising:
an acquisition unit configured to acquire, in a case where the communication apparatus and another communication apparatus operating as an access point defined by the IEEE802.11 standard cooperate to perform Spatial Reuse, information on the another communication apparatus; and
a notification unit configured to notify a station having established a connection with the communication apparatus of the information acquired by the acquisition unit and an instruction to not operate in a power save mode.

2. The communication apparatus according to Claim 1, wherein the notification unit notifies the information and the instruction by using a Measurement announcement frame defined by the IEEE802.11 standard.

3. A communication apparatus operating as a station defined by an Institute of Electrical and Electronics Engineers (IEEE)802.11 standard, the communication apparatus comprising:
a reception unit configured to receive, in a case where a first other communication apparatus operating as an access point defined by the IEEE802.11 standard and a second other communication apparatus operating as an access point defined by the IEEE802.11 standard cooperate to perform Spatial Reuse, information on the second other communication apparatus from the first other communication apparatus having established a connection with the communication apparatus; and
a control unit configured to control, in a case where the reception unit receives the information, the communication apparatus not to operate in a power save mode.

4. The communication apparatus according to Claim 3,
wherein the reception unit receives a Measurement announcement frame defined by the IEEE802.11 standard, and
wherein the control unit sets a power management mode of the communication apparatus to an active mode based on information on the power management mode included in the Measurement announcement frame.

5. The communication apparatus according to Claim 3 or 4, further comprising a transmission unit configured to receive a packet transmitted from the second other communication apparatus after the control unit sets the power management mode of the communication apparatus to the active mode, and to transmit a Measurement announcement based on the reception to the first other communication apparatus having established the connection with the communication apparatus.

6. A communication method for a communication apparatus operating as an access point defined by an Institute of Electrical and Electronics Engineers (IEEE)802.11 standard, the communication method comprising:
acquiring, in a case where the communication apparatus and another communication apparatus operating as an access point defined by the IEEE802.11 standard cooperate to perform Spatial Reuse, information on the another communication apparatus; and
notifying a station having established a connection with the communication apparatus of the acquired information and an instruction to not operate in a power save mode.

7. A communication method for a station defined by an Institute of Electrical and Electronics Engineers (IEEE)802.11 standard, the communication method comprising:
receiving, in a case where a first other communication apparatus operating as an access point defined by the IEEE802.11 standard and a second other communication apparatus operating as an access point defined by the IEEE802.11 standard cooperate to perform Spatial Reuse, information on the second other communication apparatus from the first communication apparatus having established a connection with the communication apparatus; and
controlling, in a case where the information is received, the station not to operate in a power save mode.

8. A program causing a computer to function as each of the units of the communication apparatus according to any one of Claims 1 to 5.
